# EUROPEAN PATENT APPLICATION

(11) **EP 4 576 739 A1**
(43) Date of publication of application: **25.06.2025**
(21) Application number: 24220241.4
(22) Date of filing: 16.12.2024
(51) Int. Cl.: H04L 67/12, G05B 19/418

(54) **SYSTEMS AND METHODS OF TRANSFERRING DATA FROM INSTRUMENTS TO APPLICATIONS DISCONNECTED FROM THE INSTRUMENTS**

(30) Priority: 21.12.2023 US 202318393085
(71) Applicant: ABB Schweiz AG, 5400 Baden (CH)
(72) Inventor: KAMATH, Shanthala, 5400 Baden (CH); SOM DE CERFF, Peter Carl, 5400 Baden (CH); STRAUCH, Andreas, 5400 Baden (CH); VEERLA, Mahender Rao, 5400 Baden (CH)
(74) Representative: Zimmermann & Partner Patentanwälte mbB

(57) **Abstract**

A data transfer system for transferring data from one or more instruments to one or more applications is provided. The data transfer system includes a data transfer computing device including at least one processor in communication with at least one memory device. The at least one processor is programmed to receive an action of obtaining an optical code corresponding to an application among one or more applications, retrieve, from one or more instruments, data requested by the application, and encode the data into the optical code. The data include data of the one or more instruments at an instant of the action. The one or more applications are disconnected from the one or more instruments.

## Description

### BACKGROUND

The field of the disclosure relates generally to industrial applications, and more particularly, to transferring date from instruments in industrial applications.

Industrial instruments, such as field devices (e.g., measurement devices, actuator devices, electrical drives, or power generation or distribution devices) perform key functions in industrial processes at industrial plants, such as refinement and/or distribution of oil, generation of power, or other processes. Maintenance and services, such as diagnosis, monitoring, and life prediction, of the instruments are desired to ensure the quality operation of the processes. Data from the instruments are needed to facilitate the services. Accesses to data from the instruments, however, require physical visits, which often are impractical or may be disruptive to the normal operation of the instruments. Known systems and methods are disadvantaged in some aspects in meeting the needs of industrial applications and improvements are desired.

### BRIEF DESCRIPTION

In one aspect, a data transfer system for transferring data from one or more instruments to one or more applications is provided. The data transfer system includes a data transfer computing device including at least one processor in communication with at least one memory device. The at least one processor is programmed to receive an action of obtaining an optical code corresponding to an application among one or more applications, retrieve, from one or more instruments, data requested by the application, and encode the data into the optical code. The data include data of the one or more instruments at an instant of the action. The one or more applications are disconnected from the one or more instruments.

In another aspect, a computer-implemented method for transferring data from one or more instruments to one or more applications is provided. The method includes receiving an action of obtaining an optical code corresponding to an application among one or more applications, and retrieving data from the one or more instruments, wherein the data include data of the one or more instruments at an instant of the action. The method also includes encoding the data into the optical code. The one or more applications are disconnected from the one or more instruments.

In one more aspect, one or more non-transitory machine-readable storage media for transferring data from one or more instruments to one or more applications are provided. The one or more non-transitory machine-readable storage media include a plurality of instructions stored thereon that, in response to being executed, cause a system to receive an action of obtaining an optical code corresponding to an application among one or more applications, retrieve data from the one or more instruments, and encode the data into the optical code. The data include data of the one or more instruments at an instant of the action. The one or more applications are disconnected from the one or more instruments.

### BRIEF DESCRIPTION OF DRAWINGS

These and other features, aspects, and advantages of the present disclosure will become better understood when the following detailed description is read with reference to the accompanying drawings in which like characters represent like parts throughout the drawings.
FIG. 1A is a schematic diagram of an example data transfer system.
FIG. 1B is a flow chart of an example method of data transfer.
FIG. 2 is an example data transfer system of the system shown in FIG. 1A.
FIG. 3 is another example data transfer system of the system shown in FIG. 1A.
FIG. 4 is one more example data transfer system of the system shown in FIG. 1A.
FIG. 5 is a block diagram of an example user computer device.
FIG. 6 is a block diagram of an example server computer device.

### DETAILED DESCRIPTION

The disclosure includes systems and methods for transferring data from instruments in industrial applications. Method aspects will be in part apparent and in part explicitly discussed in the following description.

Industrial instruments, such as field devices and analyzers, perform key functions in industrial processes at industrial plants. Instruments are connected to automation systems running automation/control communication and/or additional software application that allow human users and automated systems to interact with the device. Primary software is used to perform the primary function of instruments, such as control, engineering, or asset management. The primary software includes device drivers and other device-specific software. In the case of field devices, the primary software is often based on FDI or FDT technology, where vendors of devices provide device drivers that may run on any vendor system. For analytical and field devices, connections to SCADA applications for local site management serve a similar function of communicating among devices from different vendors. For other devices, a remote browser user interface (UI) provides access to the devices via a local communication network. These software applications are part of the plant operation and maintenance and are secured into a protected communication network separated from the outside world. Further, the instruments may not have visible displays, and/or be relatively isolated in the industrial facility such as plants, substations, or pipelines with access restrictions.

Data from instruments are often needed from time to time by vendors of the instruments or other service providers to provide services of the instruments to the customer, such as equipment verification, inventory management, asset management, remote diagnostics, and digital twin. Retrieving instrument data is often tedious. It may involve periodic hot work-permits, or connection of a secondary communication interface. Using a secondary communication or the primary software for the vendor to access data is often difficult or impermissible due to the isolation of the communication network for the instruments. Access to the instruments from a device outside the communication network is restricted due to the critical nature of the industrial applications and the heighten level of security placed on the communication network.

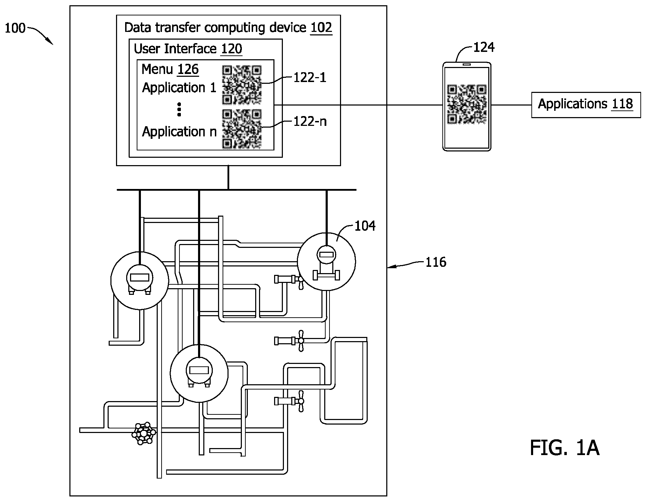

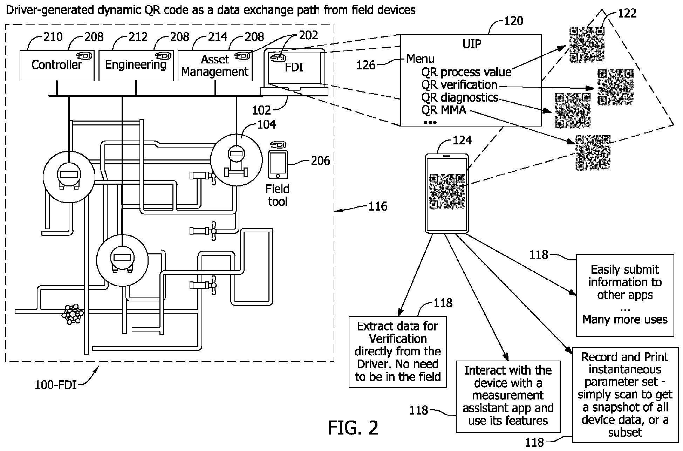

FIG. 1A is a schematic diagram of an example data transfer system 100. In the example embodiments, data transfer system 100 includes a data transfer computing device 102. Data transfer computing device 102 is configured to communicate with instruments 104. Instruments 104 may be field devices in an industrial plant for industrial processes such as refinement and/or distribution of oil, generation of power, or other processes. Field devices are described as examples for illustration purposes only. Instruments 104 may be any devices used in industrial applications such as measurement devices, actuator devices, electrical drives, power generation or distribution devices, or devices for motors. Instruments 104 perform key functions in the industrial processes at the industrial plants. For example, instruments 104 may be measurement devices configured to measure physical properties and/or chemical properties at locations in the plant. Instrument 104 may not have a visual display. In known methods, data from instrument 104 may be retrieved via a field tool 206 (see FIG. 2 described later). Physical wires or wireless connection such as Bluetooth is needed for establishing the communication between field tool 206 and instrument 104. For security consideration, the use of field tool 206 is restricted to be at the site of instruments 104.

In the example embodiments, data from instruments are transmitted to a higher level device or application such as primary software 208 (see FIGs. 2-4 described later). Primary software 208 includes controller 210, engineering 212, or asset management 214. Primary software 208 links to instrument 104 and performs the primary purposes of instrument 104. For example, if instrument 104 is a temperature transmitter involved in a control loop. The data are the temperatures measured by the temperature transmitter. The corresponding primary software 208 may be a controller that performs the control based on the temperatures. The communication between instrument 104 and primary software 208 is typically via wired communication and may be via wireless communication. The communication network 116 formed by instruments 104 and primary software 208 is isolated from external connections or devices, where wired or wireless communication to devices outside the communication network 116 is prohibited.

For a vendor of instrument 104, to service instrument 104, data of instrument 104 is needed. For example, the vendor needs data from instrument 104 to determine how long the remaining life of instrument 104 is, whether a maintenance is needed, and what maintenance services are needed. Primary software 208 may be operated by a different vendor from the vendor of instrument 104. More importantly, using primary software 208 to obtain data from instruments 104 for the purposes of services is typically impermissible for security concerns. The plants protect critical processes of instruments 104, such as data from measurement instruments 104 delivered to the control system. Any additional software or connection to local communication network 116 raises security concern to the plants, and often is not permitted.

In known methods, data are retrieved through a physical visit of instruments. Physical accesses to instruments are, however, often unavailable. For example, the instrument may be inside an oil tank. For instruments that have physical access, a hard work permit, which is a permit for a person with suitable security clearance to visit the ground, is often required. The permitted person connects a secondary device, such as field tool 206, with the instrument, and read information about the instrument through the secondary device. The visit is tedious and time consuming because a plant may include a relatively large number of instruments. Further, the visit may disrupt the primary purpose of instrument 104 and operations performed in the industrial applications.

In contrast, systems and methods described herein provide secured transferring of data from instruments out of communication network 116 using optical codes. The data transfer is unidirectional, where the risk of overwriting or changes to instruments 104 or primary software 208 is eliminated. The data is dynamically updated and packaged to be suitable for the specific purposes of applications 118. The data are input into applications 118 and further processed. Data may be relayed and/or further transferred to applications 118 on cloud-based computing devices.

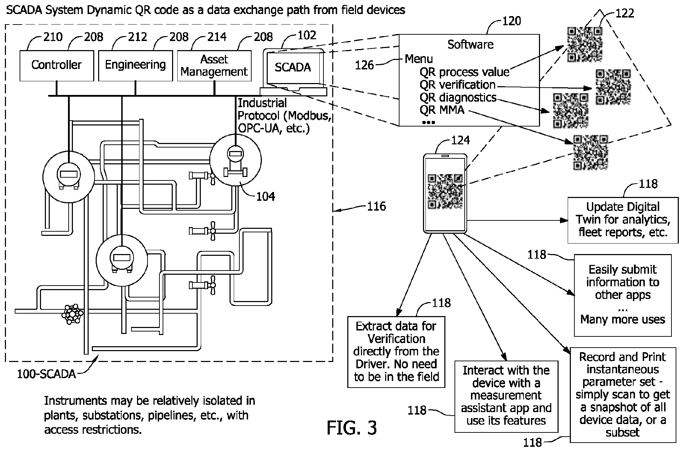

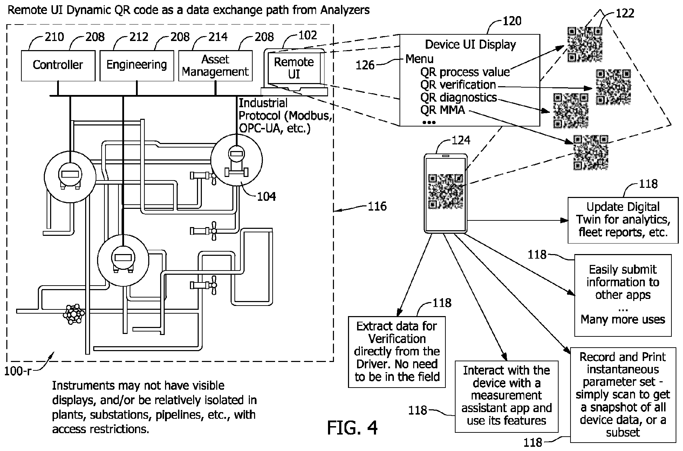

In the example embodiments, data transfer system 100 includes a data transfer computing device 102 configured to facilitate the transfer of data from instruments 104 out of communication network 116 to outside applications 118. Data transfer computing device 102 may be a computing device implemented with primary software 208 (FIG. 2), or a computing device separate from computing devices for primary software 208 (see FIGs. 3 and 4). Data transfer computing device 102 is within the closed communication network 116 of instruments 104. Data transfer computing device 102 includes a user interface 120. Data transfer computing device is configured to generate an optical code 122. Optical codes 122 are displayed on user interface 120. Example optical code 122 may be a 2D visual code such as a bar code, a dynamic constellation, a QR code, or a movie of 2D visual codes. A movie of 2D visual codes has a greater storage than a single 2D visual code. Data are encoded in optical code 122. Optical code 122 is suitable for being read by an optical reader 124, such as a mobile device like a cellular phone or a tablet that equipped with a scanner suitable for reading the optical code. A suitable scanner may be a camera or a bar code reader.

In the example embodiments, optical code 122 is dynamically updated. Upon the receipt of an action of obtaining optical code 122, such as scanning optical code 122 by an optical scanner like an action of placing a camera over optical code 122, data transfer computing device 102 is configured to retrieve data from instruments at the instant of the action, package the data in a desired format, and encode the data into optical code 122. There may a minute delay from the moment the optical reader 124 is scanning optical code 122 to the moment data are retrieved and packaged into optical code 122. The delay may not be discernible to a user. The data are not prestored on data transfer computing device 102 and are, instead, retrieved upon the action of obtaining optical code 122 and correspond to the moment of the action. As a result, the data retrieved by scanning optical code 122 are dynamically updated and reflect the status of instruments at the instant of obtaining optical code 122.

In the example embodiments, data transfer computing device 102 is configured to generate a plurality of optical codes 122. Different applications 118 may request different data from instruments 104 or data from different groups and/or subgroups of instruments 104. A menu 126 is provided on user interface 120 and lists optical codes 122, each corresponding to a specific application 118. For example, optical codes 122 may include optical code 122-1 for process values, optical code 122 for verification, and optical code 122-n for diagnostics. Different optical code 122 encodes data needed for the specific application 118 and may include different data. An optical code 122 for process values may include data of instruments 104 at various processes. An optical code 122 for verification may include data reflecting performances of instruments 104 and may be used to compare with the specifications and verify the performances of instruments 104. An optical code 122 for diagnostics may include failure data of instruments 104 and are used to determine problems in the operations of instruments 104 and causes of the problems. In some embodiments, the data may be packaged in a format requested by specific application 118. For example, the data may be packaged into a table or a chart, which is a format requested by application 118.

In the example embodiments, data are retrieved by scanning optical codes 122. Data may be processed by application 118 and/or transferred to application 118. In some embodiments, optical reader 124 merely relays data encoded in optical codes 122 to application 118 for displaying, recording, and/or further processing.

In the example embodiments, application 118 may be implemented on optical reader 124. Additionally or alternatively, application 118 may be implemented on a device separate or remote from optical reader 124 and in communication with optical reader 124 via wired or wireless communication. Application 118 may be a mobile app or a web application. Application 118 may be accessed directly at optical reader 124. For example, optical reader 124 is a mobile device and application 118 is an mobile app running on optical reader 124 or a web application accessible by optical reader 124.

In the example embodiments, application 118 may process data encoded in optical code 122 and provide output and feedback to the user of application 118. Data may be processed for verification, diagnostics, recording, printing, and/or other service purposes. Data may be used in generating a digital twin of instrument 104, which may be used for simulating, designing, monitoring, and/or diagnosing instrument 104. Application 118 may upload some or all of data in optical code 122, and/or the processed data by application 118 to other applications 118. The other Applications 118 may be on the same device as optical reader 124, on a device separate or remote from optical reader 124, or in the cloud. The other applications 118 may further process the data. Output from the other applications 118 may be provided back to application 118 on optical reader 124 and delivered to the user over the user interface of application 118 on optical reader 124. In some embodiments, data may be periodically retrieved by scanning with optical reader 124 at a predetermined interval or a user-defined interval. The periodically-retrieved data may be compiled into historical data for monitoring and/or diagnosing the performances of instruments 104. Historical data may also be presented to the user, where a comparison or prediction may be provided. For example, the life of instrument 104 may be provided to the user based on the historical data.

The systems and methods described herein are advantageous over transferring data via a link. A link is typically not permitted for the security consideration of industrial applications. Further, a link does not transport the data and only provides a link to display the data. Extra steps or manual recordation or transfer is needed for using the data. In contrast, optical codes facilitate direct feeding of the data to another application. An optical code maintains the integrity of the timestamp of the data, where the data is dynamically updated. Optical codes encapsulates the data and prevent human errors in transporting the data. For example, data, such as an instantaneous parameter set, of instruments 104 may be recorded, stored, printed by a simple scan to get a snap shot of all or subsets of data of instruments 104, eliminating human errors in recording and transferring data. Labor is saved in retrieving data from instruments 104 to the SCADA or the FDI system, and from the SCADA/FDI system to the cloud, and from the cloud back to the device. Accordingly, providing optical codes that incorporate data is advantageous in eliminating extra steps or human errors related to manual transfer.

Further, using optical codes 122 in transporting data is secure and convenient. The transfer is unidirectional, being only from instruments 104 to optical readers 124 external to communication network 116, eliminating security risk of overwriting or making changes from external devices. The transfer is convenient because physical or wireless connection is not needed for the transfer. A user does not need to clip physical cables to instrument 104 to establish a wired connection or entering credentials to establish a wireless connection. Instead, a user may retrieve data by simply scanning optical codes 122.

The software application implemented on data transfer computing device 102 is separate from instrument 104 but inside the boundary of the isolated communication network 116 of instruments 104. The software application serves as a proxy to access information via optical codes 122 such that optical reader 124 may scan and capture the data for use by the vendor's software application, which is separate from the primary software 208 for the operation of instrument 104. Therefore, a temporary unidirectional bridge with isolated communication network 116 is provided and facilitate transfer of data of instrument 104 to a vendor software application, thereby providing additional value to the customers, such as services and maintenance of instrument 104. The security boundary of the automation system is maintained and communication network 116 remains secure and protected. The vendor of instrument 104 is enabled to provide services for instrument 104 without the need of physical visits, thereby greatly reducing costs and labor and increasing efficiency and effectiveness in providing services. Systems and methods described herein are also advantageous in obtaining data without interfering the operation of instruments 104. Systems and methods described herein meet the long-felt need of security conscious customers because systems and methods do not present any security concerns from physical connections or wireless connections.

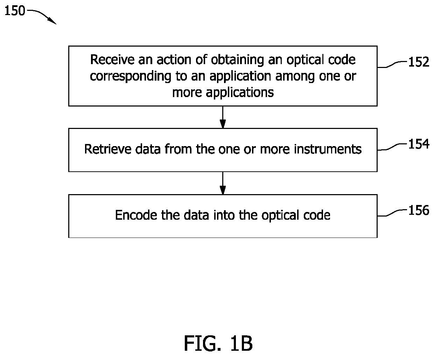

FIG. 1B is a flow chart of an example method 150 of data transfer from instruments to applications. Applications 118 are disconnected from instruments 104, where instruments 104 are within a communication network 116 isolated from applications 118, and are not connected with applications 118 via physical connections or wireless communication, except for a unidirectional transfer via optical codes 122. In the example embodiment, method 150 includes receiving 152 an action of obtaining an optical code corresponding to an application among one or more applications. An action of obtaining an optical code may include scanning the optical code. Method 150 also includes retrieving 154 data from the one or more instruments. The data include data of the one or more instruments at the instant of the action. Method 150 further includes encoding 156 the data into the optical code.

FIG. 2 shows an example data transfer system 100-FDI. In the example embodiment, method 150 is implemented in any application that complies with a field device driver integration (FDI) standard, such as an FDI device driver. An FDI device driver is depicted as an example for illustration purposes only. A device driver may be programmed using other technology such as a field device technology device type manager (FDT/DTM) technology. FDI is a standardized communication technology used in process automation to connect and communicate with the field instruments through wires. FDI drivers are paired with field instruments 104 and enable the field instruments 104 to function seamlessly with systems of primary software 208 of any vendors. Method 150 and instructions for carrying out method 150 are included in FDI drivers of instruments 104. Optical codes 122 may be accessed on any primary software 208 or computing device installed with FDI device driver 202 of instrument 104. FDI device driver 202 includes a user interface, where a user navigates through for diagnostic values, configuration, and other information of instrument 104.

In operation, instrument 104 performs its operations and communicates with connected devices or systems through communication mechanisms such as command/response or data publishing. The communication protocol may be Modbus. An FDI-technology-based (or FDT/DTM-based) device driver 202 interacts with instrument 104 using the FDI package (or DTM) of instrument 104 that has been imported by device driver 202. Device driver 202 provides access to data from instrument 104 through instrument-vendor specific user interface 120. Device driver 202 is typically used for configuring, monitoring, maintaining, and/or diagnosing instrument 104. An example device driver 202 is a field information manager (FIM). FDI package (or DTM) of instrument 104 or software applications include logic to fetch required data from instrument 104, and format the data into an optical code 122. The FDI package (or DTM) may include user interface 120 that presents menus to the user. The user may use user interface 120 to access various groups of data through the dynamically generated optical codes 122. An optical reader 124 such as a cellular phone, a tablet, or a laptop, scans and captures optical code 122 and provide the data encoded in optical code 122 to an application 118 such as a vendor software application. Application 118 may run on the same optical reader 124, another device accessible via wired or wireless communication, or a cloud-based computing device. Application 118 further processes the data and provides actions and/or feedback based on the processing.

FIG. 3 shows another example data transfer system 100-SCADA. In the example embodiment, method 150 and instructions for performing method 150 are implemented on data transfer computing device 102 that is connected with instruments 104. Data transfer computing device 102 communicates with instruments 104 following the format specified by a supervisory control and data acquisition (SCADA) communication protocol. Data are retrieved from instruments, and formatted or packaged under the SCADA communication protocol. Data from instrument 104 are transferred using a SCADA communication protocol such as Modbus or OPC UA (unified architecture).

FIG. 4 shows one more example data transfer system 100-r. In the example embodiment, method 150 and instructions for performing method 150 are implemented on a data transfer computing device 102 that is remote from instruments 104 but is within isolated communication network 116 of instruments 104. Instruments may not have visible displays on instruments xxx or primary software xxx. Access to instrument 104 is through a web browser on data transfer computing device 102. The webpage displays accesses to data of instruments 104 such as a menu 126 and optical codes 122 for different applications 118.

The computer-implemented methods discussed herein may include additional, less, or alternate actions, including those discussed elsewhere herein. The methods may be implemented via one or more local or remote processors, transceivers, and/or sensors (such as processors, transceivers, and/or sensors mounted on mobile devices, or associated with smart infrastructure or remote servers), and/or via computer-executable instructions stored on non-transitory computer-readable media or medium.

Additionally, the computer systems discussed herein may include additional, less, or alternate functionality, including that discussed elsewhere herein. The computer systems discussed herein may include or be implemented via computer-executable instructions stored on non-transitory computer-readable media or medium.

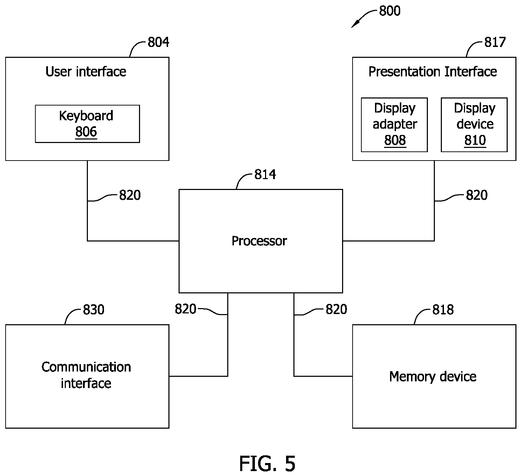

At least parts of methods described herein may be implemented in any suitable computer device 800 and software implemented therein. Data transfer computing device 102 may be any suitable computing device 800 and software implemented therein. FIG. 5 is a block diagram of an example computer device 800. In the example embodiment, computer device 800 includes a user interface 804 that receives at least one input from a user. User interface 804 may include a keyboard 806 that enables the user to input pertinent information. User interface 804 may also include, for example, a pointing device, a mouse, a stylus, a touch sensitive panel (e.g., a touch pad and a touch screen), a gyroscope, an accelerometer, a position detector, and/or an audio input interface (e.g., including a microphone).

Moreover, in the example embodiment, computer device 800 includes a presentation interface 817 that presents information, such as input events and/or validation results, to the user. Presentation interface 817 may also include a display adapter 808 that is coupled to at least one display device 810. More specifically, in the example embodiment, display device 810 may be a visual display device, such as a cathode ray tube (CRT), a liquid crystal display (LCD), a light-emitting diode (LED) display, and/or an "electronic ink" display. Alternatively, presentation interface 817 may include an audio output device (e.g., an audio adapter and/or a speaker) and/or a printer.

Computer device 800 also includes a processor 814 and a memory device 818. Processor 814 is coupled to user interface 804, presentation interface 817, and memory device 818 via a system bus 820. In the example embodiment, processor 814 communicates with the user, such as by prompting the user via presentation interface 817 and/or by receiving user inputs via user interface 804. The term "processor" refers generally to any programmable system including systems and microcontrollers, reduced instruction set computers (RISC), complex instruction set computers (CISC), application specific integrated circuits (ASIC), programmable logic circuits (PLC), and any other circuit or processor capable of executing the functions described herein. The above examples are for illustration purposes only, and thus are not intended to limit in any way the definition and/or meaning of the term "processor."

In the example embodiment, memory device 818 includes one or more devices that enable information, such as executable instructions and/or other data, to be stored and retrieved. Moreover, memory device 818 includes one or more computer readable media, such as, without limitation, dynamic random access memory (DRAM), static random access memory (SRAM), a solid state disk, and/or a hard disk. In the example embodiment, memory device 818 stores, without limitation, application source code, application object code, configuration data, additional input events, application states, assertion statements, validation results, and/or any other type of data. Computer device 800, in the example embodiment, may also include a communication interface 830 that is coupled to processor 814 via system bus 820. Moreover, communication interface 830 is communicatively coupled to data acquisition devices.

In the example embodiment, processor 814 may be programmed by encoding an operation using one or more executable instructions and providing the executable instructions in memory device 818. In the example embodiment, processor 814 is programmed to select a plurality of measurements that are received from data acquisition devices.

In operation, a computer executes computer-executable instructions embodied in one or more computer-executable components stored on one or more computer-readable media to implement aspects of the invention described and/or illustrated herein. The order of execution or performance of the operations in embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

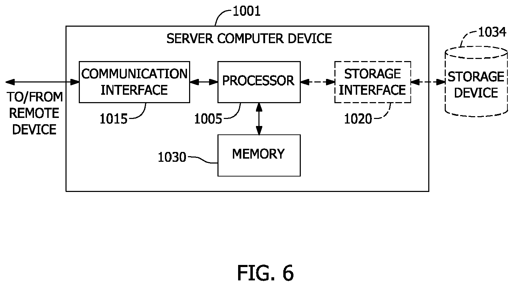

At least parts of methods described herein may also be implemented with a server computer device 1001. FIG. 6 illustrates an example configuration of a server computer device 1001. Server computer device 1001 also includes a processor 1005 for executing instructions. Instructions may be stored in a memory area 1030, for example. Processor 1005 may include one or more processing units (e.g., in a multi-core configuration).

Processor 1005 is operatively coupled to a communication interface 1015 such that server computer device 1001 is capable of communicating with a remote device or another server computer device 1001. For example, communication interface 1015 may receive data from optical reader 124, via the Internet.

Processor 1005 may also be operatively coupled to a storage device 1034. Storage device 1034 is any computer-operated hardware suitable for storing and/or retrieving data. In some embodiments, storage device 1034 is integrated in server computer device 1001. For example, server computer device 1001 may include one or more hard disk drives as storage device 1034. In other embodiments, storage device 1034 is external to server computer device 1001 and may be accessed by a plurality of server computer devices 1001. For example, storage device 1034 may include multiple storage units such as hard disks and/or solid state disks in a redundant array of independent disks (RAID) configuration, storage device 1034 may include a storage area network (SAN) and/or a network attached storage (NAS) system.

In some embodiments, processor 1005 is operatively coupled to storage device 1034 via a storage interface 1020. Storage interface 1020 is any component capable of providing processor 1005 with access to storage device 1034. Storage interface 1020 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 1005 with access to storage device 1034.

At least one technical effect of the systems and methods described herein includes (a) retrieving data from instruments in isolated communication network to applications outside the communication network without adding a second communication channel; (b) dynamically updated optical codes that encode data from instruments; (c) secure and convenient transfer of data from the instruments to the applications; and (d) transferring data from instruments to applications for further process and feedback.

Example embodiments of systems and methods for data transfer are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

As used herein, an element or step recited in the singular and proceeded with the word "a" or "an" should be understood as not excluding plural elements or steps, unless such exclusion is explicitly recited. Furthermore, references to "example" or "one example" of the present disclosure are not intended to be interpreted as excluding the existence of additional examples that also incorporate the recited features. Further, to the extent that terms "includes," "including," "has," "contains," and variants thereof are used herein, such terms are intended to be inclusive in a manner similar to the term "comprises" as an open transition word without precluding any additional or other elements.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.
Subsequently further embodiments according to the present disclosure are described.
Embodiment 1: A data transfer system for transferring data from one or more instruments to one or more applications, the data transfer system comprising a data transfer computing device comprising at least one processor in communication with at least one memory device, wherein the at least one processor is programmed to:
   receive an action of obtaining an optical code corresponding to an application among one or more applications;
   retrieve, from one or more instruments, data requested by the application, wherein the data include data of the one or more instruments at an instant of the action; and
   encode the data into the optical code,
   wherein the one or more applications are disconnected from the one or more instruments.
Embodiment 2: The data transfer system of embodiment 1, wherein the at least one processor is configured to execute computer-executable instructions programmed in a device driver of the one or more instruments.
Embodiment 3: The data transfer system of embodiment 1, wherein the at least one processor is configured to retrieve the data from the one or more instruments by:
   communicating with the one or more instruments using a supervisory control and data acquisition (SCADA) protocol.
Embodiment 4: The data transfer system of embodiment 1, wherein the data transfer computing device is remote from the one or more instruments and in a communication network of the one or more instruments.
Embodiment 5: The data transfer system of embodiment 1, wherein the optical code comprises a two-dimensional (2D) visual code, and the at least one processor is further programmed to:
   receive the action of obtaining the 2D visual code; and
   encode the data into the 2D visual code.
Embodiment 6: The data transfer system of embodiment 1, wherein the optical code comprises a movie of 2D visual codes, and the at least one processor is further programmed to:
   receive the action of obtaining the movie of 2D visual codes; and
   encode the data into the movie of 2D visual codes.
Embodiment 7: A computer-implemented method for transferring data from one or more instruments to one or more applications, the method comprising:
   receiving an action of obtaining an optical code corresponding to an application among one or more applications;
   retrieving data from the one or more instruments, wherein the data include data of the one or more instruments at an instant of the action; and
   encoding the data into the optical code,
   wherein the one or more applications are disconnected from the one or more instruments.
Embodiment 8: The method of embodiment 7 further comprising:
   processing, by the application, the data.
Embodiment 9: The method of embodiment 7 further comprising:
   relaying, by the application, the data to another application; and
   processing, by the another application, the data.
Embodiment 10: The method of embodiment 7 further comprising:
   providing feedback based on processing of the data.
Embodiment 11: The method of embodiment 7, wherein retrieving the data further comprises:
   retrieving, from the one or more instruments, the data requested by the application.
Embodiment 12: The method of embodiment 11, wherein the method further comprises:
   packaging the data into a format requested by the application.
Embodiment 13: The method of embodiment 7, wherein:
   receiving the action further comprises receiving the action of obtaining the optical code including a two-dimensional (2D) visual code; and
   encoding the data further comprises encoding the data into the 2D visual code.
Embodiment 14: The method of embodiment 7, wherein:
   receiving the action further comprises receiving the action of obtaining the optical code including a movie of 2D visual codes; and
   encoding the data further comprises encoding the data into the movie of 2D visual codes.
Embodiment 15: One or more non-transitory machine-readable storage media for transferring data from one or more instruments to one or more applications, comprising a plurality of instructions stored thereon that, in response to being executed, cause a system to:
   receive an action of obtaining an optical code corresponding to an application among one or more applications;
   retrieve data from the one or more instruments, wherein the data include data of the one or more instruments at an instant of the action; and
   encode the data into the optical code,
   wherein the one or more applications are disconnected from the one or more instruments.
Embodiment 16: The one or more non-transitory machine-readable storage media of embodiment 15, wherein the plurality of instructions further cause the system to:
   retrieve, from the one or more instruments, the data requested by the application.
Embodiment 17: The one or more non-transitory machine-readable storage media of embodiment 15, wherein the plurality of instructions are programmed in a device driver of the one or more instruments.
Embodiment 18: The one or more non-transitory machine-readable storage media of embodiment 15, wherein the plurality of instructions further cause the system to:
   retrieve the data from the one or more instruments by:
   communicating with the one or more instruments using a supervisory control and data acquisition (SCADA) protocol.
Embodiment 19: The one or more non-transitory machine-readable storage media of embodiment 15, wherein the plurality of instructions further cause the system to display access to the one or more instruments on a webpage on a data transfer computing device remote from the one or more instruments and in a communication network of the one or more instruments.
Embodiment 20: The one or more non-transitory machine-readable storage media of embodiment 15, wherein the plurality of instructions further cause the system to:
   receive the action of obtaining the optical code including a movie of two-dimensional (2D) visual codes; and
   encode the data into the movie of 2D visual codes.

## Claims

1. A data transfer system (100) for transferring data from one or more instruments (104) to one or more applications (118), the data transfer system comprising a data transfer computing device (102) comprising at least one processor in communication with at least one memory device, wherein the at least one processor is programmed to:
receive an action of obtaining an optical code (122, 122-1, 122-n) corresponding to an application (118) among one or more applications;
retrieve, from one or more instruments, data requested by the application, wherein the data includes data of the one or more instruments at an instant of the action; and
encode the data into the optical code,
wherein the one or more applications are disconnected from the one or more instruments.

2. The data transfer system of claim 1, wherein the at least one processor is configured to execute computer-executable instructions programmed in a device driver (202) of the one or more instruments.

3. The data transfer system of claim 1 or 2, wherein the at least one processor, to retrieve the data from the one or more instruments, is further programmed to:
communicate with the one or more instruments using a supervisory control and data acquisition (SCADA) protocol.

4. The data transfer system of any one of claims 1 to 3, wherein the data transfer computing device is remote from the one or more instruments and in a communication network (116) of the one or more instruments.

5. The data transfer system of any one of claims 1 to 4, wherein the optical code comprises a two-dimensional (2D) visual code, and the at least one processor is further programmed to:
receive the action of obtaining the 2D visual code; and
encode the data into the 2D visual code.

6. The data transfer system of any one of claims 1 to 5, wherein the optical code comprises a movie of 2D visual codes, and the at least one processor is further programmed to:
receive the action of obtaining the movie of 2D visual codes; and
encode the data into the movie of 2D visual codes.

7. A computer-implemented method (150) for transferring data from one or more instruments (104) to one or more applications (118), the method comprising:
receiving (152) an action of obtaining an optical code (122, 122-1, 122-n) corresponding to an application (118) among one or more applications (118);
retrieving (154) data from the one or more instruments, wherein the data includes data of the one or more instruments at an instant of the action; and
encoding (156) the data into the optical code,
wherein the one or more applications are disconnected from the one or more instruments.

8. The computer-implemented method of claim 7, further comprising:
processing, by the application, the data.

9. The computer-implemented method of claim 7 or 8, further comprising:
relaying, by the application, the data to another application (118); and
processing, by the another application, the data.

10. The computer-implemented method of any one of claims 7 to 9 further comprising:
providing feedback based on processing of the data.

11. The computer-implemented method of any one of claims 7 to 10, wherein retrieving the data further comprises:
retrieving, from the one or more instruments, the data requested by the application.

12. The computer-implemented method of claim 11, wherein the method further comprises:
packaging the data into a format requested by the application.

13. The computer-implemented method of any one of claims 7 to 12, wherein:
receiving the action further comprises receiving the action of obtaining the optical code including a two-dimensional (2D) visual code; and
encoding the data further comprises encoding the data into the 2D visual code.

14. The computer-implemented method of any one of claims 7 to 13, wherein:
receiving the action further comprises receiving the action of obtaining the optical code including a movie of 2D visual codes; and
encoding the data further comprises encoding the data into the movie of 2D visual codes.

15. One or more non-transitory machine-readable storage media for transferring data from one or more instruments (104) to one or more applications (118), comprising a plurality of instructions stored thereon that, in response to being executed, cause a system to:
perform the computer-implemented method of any one of claims 7 to 14.
